# EUROPEAN PATENT SPECIFICATION

(11) **EP 0 808 794 B1**
(45) Date of publication and mention of the grant of the patent: **09.09.1998**
(21) Application number: 96120265.2
(22) Date of filing: 17.12.1996
(51) Int. Cl.: B67B 5/06, B21F 45/04, B23Q 7/02, B23Q 5/34

(54) **Unit for processing wire products**
Einheit zur Verarbeitung von Erzeugnissen aus Draht
Unité de traitement de produits de fil

(30) Priority: 21.05.1996 IT TO960429
(43) Date of publication of application: 26.11.1997
(73) Proprietor: Gefin S.r.l., 10123 Torino (IT)
(72) Inventor: Getto, Piero, 10010 Banchette (IT)
(74) Representative: Franzolin, Luigi

(56) References cited:
- WO-A-89/11359
- WO-A-89/11360
- US-A- 4 388 989

## Description

The present invention relates to a unit for processing wire products, in particular, safety fasteners for sparkling drink bottle corks and stoppers.

As is known, safety fasteners of the above type are made on fully automatic production lines comprising a number of processing units for performing various wire forming operations.

Known processing units substantially comprise a carousel conveyor rotating in steps about its axis and for feeding a number of fasteners along a circular path between a loading and an unloading station respectively associated with a loading and an unloading assembly. Such units also comprise one or more radial work stations interposed between the loading and unloading stations along the circular path, and comprising respective operating members, see for example WO-A-8 911 360

The loading, unloading and work stations are operated by respective independent, appropriately timed control assemblies.

Known processing units are therefore fairly complex in design, expensive to produce, and are complicated and expensive to assemble and set up.

It is an object of the present invention to provide a unit for processing wire products, designed to overcome the drawbacks typically associated with known units of the aforementioned type.

According to the present invention, there is provided a unit for processing wire products, particularly safety fasteners for sparkling drink bottle corks and stoppers, and comprising:
- conveying means for successively receiving said products at a loading station, and for feeding the products in steps along a substantially circular path to an unloading station located downstream from said loading station along said path;
- at least a first member movable back and forth in a first substantially radial direction in relation to said path to successively transfer said products from supply means to said conveying means at said loading station;
- at least a second member movable back and forth in a second substantially radial direction in relation to said path to successively transfer said products from said conveying means to an output channel at said unloading station; and
- at least a third member movable back and forth in a third substantially radial direction in relation to said path to perform an operation on a said product at a work station located between said loading and unloading stations along said path;
   characterized by comprising control means for activating one of said members; and transmission means for transmitting motion from said one of said members to the other said members.

A preferred, non-limiting embodiment of the present invention will be described by way of example with reference to the accompanying drawings, in which:
Figure 1 shows a plan view, with parts removed for clarity, of a unit for processing wire products in accordance with the present invention;
Figure 2 shows a larger-scale first diametrical section of the Figure 1 unit with parts removed for clarity;
Figure 3 shows a larger-scale second diametrical section of the Figure 1 unit with parts removed for clarity;
Figure 4 shows a partially sectioned side view, with parts removed for clarity, of a calibration assembly of the Figure 1 unit;
Figure 5 shows a larger-scale front view, with parts removed for clarity, of the Figure 4 assembly;
Figure 6 shows a larger-scale plan view, with parts removed for clarity, of a detail of the Figure 1 unit;
Figure 7 shows a schematic plan view of a variation of the Figure 1 unit;
Figure 8 shows a view in perspective of a safety fastener for sparkling drink bottle corks and stoppers.

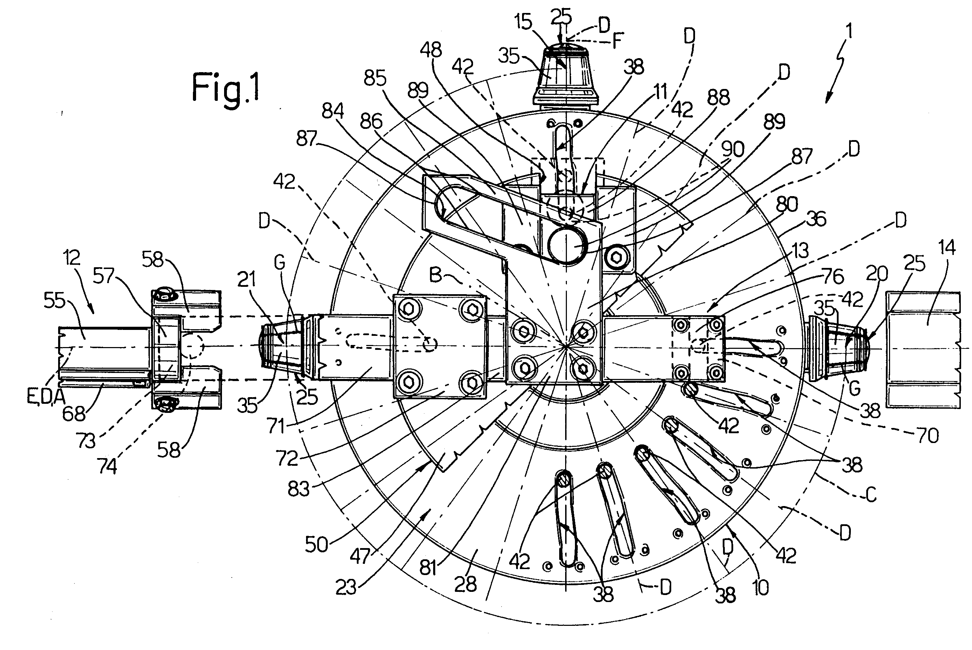

Number 1 in Figure 1 indicates a unit for processing wire products, in particular, for calibrating safety fasteners G for sparkling drink bottle corks and stoppers (not shown), and which is preferably employed on an automatic line (not shown) for producing fasteners G.

As is known, each fastener G (Figure 8) presents a longitudinal axis A, and comprises a body 2 for surrounding a bottle cork or stopper, and an annular girdle which is tightened around the neck of the bottle. More specifically, body 2 comprises a number of uprights 4 converging to form an annular end connecting element 5, so that body 2 is substantially truncated-cone-shaped. At the free end opposite annular element 5, uprights 4 are bent to form respective eyelets 6 housing girdle 3, which presents a loop 7 which is twisted, in use, to tighten girdle 3 about the neck of the bottle. Each fastener G also comprises a substantially circular cap 8 surrounded, in use, by annular element 5.

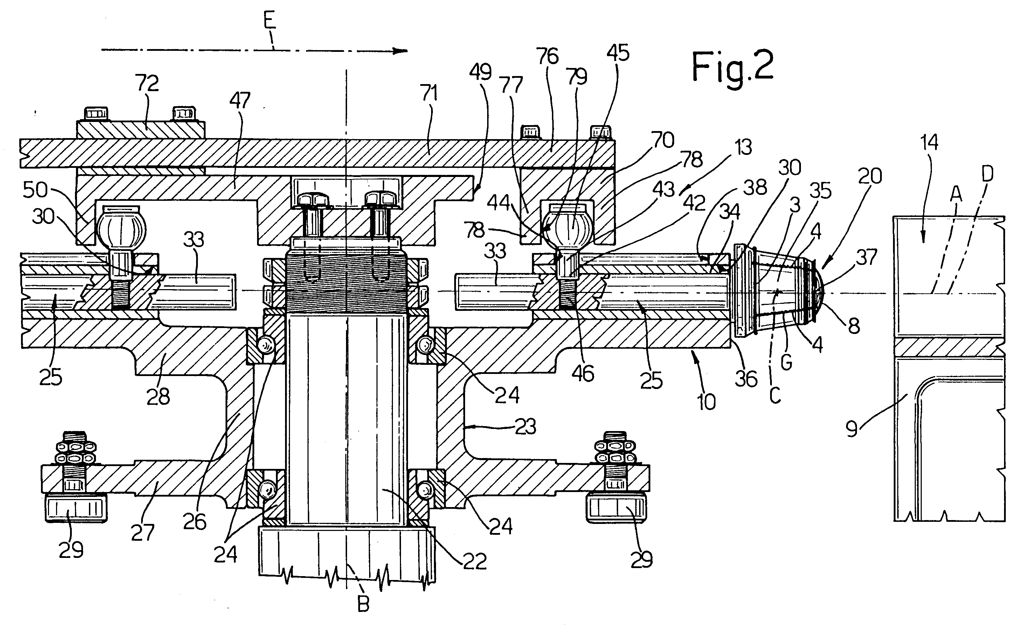

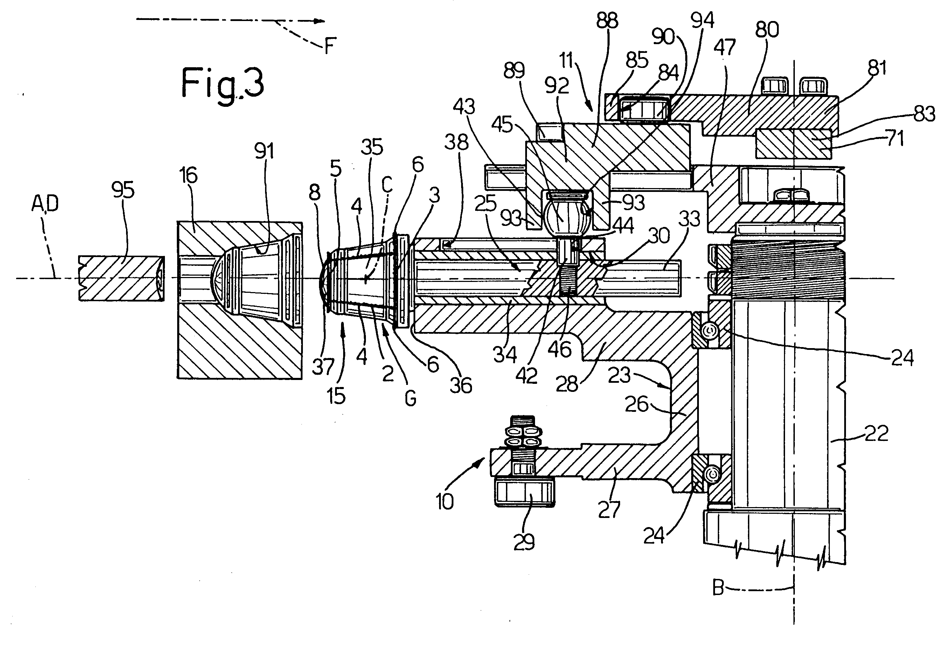

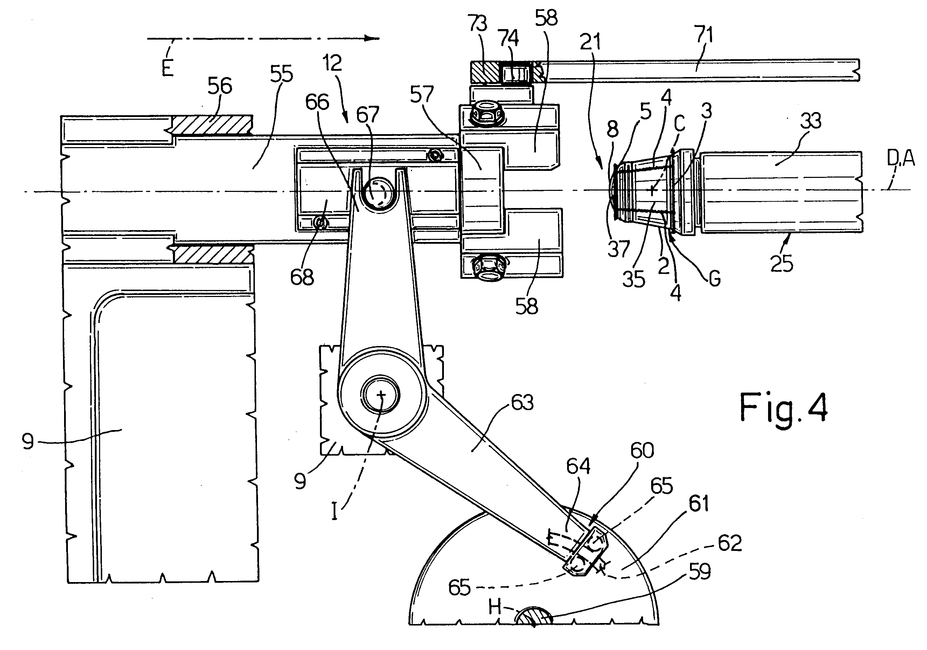

With reference to Figure 1, unit 1 comprises a supporting structure 9 (Figures 2, 4); an "indexing table" type conveying device 10 rotating about its axis B; a first transfer assembly 11 for transferring fasteners G from a supply device 16 (shown only partly in Figure 3) to device 10; a calibrating assembly 12 for calibrating fasteners G; and a second transfer assembly 13 for transferring fasteners G from device 10 to an output channel 14.

Conveying device 10 receives fasteners G successively from device 16 at a loading station 15, and feeds them in steps to an unloading station 20 along a path C comprising a 270° arc of a circle with its center at axis B.

Assembly 11 receives fasteners G successively from device 16 at station 15, and transfers them successively on to device 10.

Assembly 12 provides for calibrating one fastener G at a time at a calibration station 21 located between stations 15 and 20 along path C; which calibration operation comprises bending the uprights 4 of each fastener G to a predetermined angle in relation to annular element 5, so that all the fasteners G leaving station 21 are formed at the same angle.

Assembly 13 provides for successively transferring fasteners G from device 10 to channel 14 at station 20, and for stacking fasteners G coaxially along channel 14.

With reference to Figures 1, 2, 3 and 6, device 10 comprises a shaft 22 of axis B and integral with structure 9; a wheel 23 fitted coaxially to shaft 22 via the interposition of a pair of angular-contact ball bearings 24, and rotating in steps about shaft 22; and a number of retaining elements 25 fitted to wheel 23, equally spaced about axis B, and for conveying respective fasteners G along path C.

More specifically, wheel 23 comprises a hub 26 coaxial with shaft 22 and mounted on bearings 24; and a pair of annular end flanges 27, 28 extending radially from hub 26. At its outer periphery, flange 27 comprises a number of drive pins 29 with respective axes parallel to axis B, and which are fitted in projecting manner to flange 27 and cooperate with a known device (not shown) for driving wheel 23 in steps.

Flange 28 presents a number of radial through holes 30 equally spaced angularly, presenting respective axes D, and each housing a respective element 25 also of axis D. More specifically, each element 25 comprises a shaft 33 fitted in rotary and axially-sliding manner inside a respective hole 30 via the interposition of a bushing 34; and a substantially truncated-cone-shaped end head 35 projecting radially from an outer edge 36 of flange 28 with the smaller end facing outwards, and for positively engaging a respective fastener G. More specifically, each fastener G is maintained by respective head 35 with axis A coincident with axis D, and is positioned with cap 8 contacting the rounded free end 37 of head 35.

Heads 35 thus define path C, which extends substantially parallel to edge 36 of flange 28; stations 20 and 21 are located on diametrically opposite sides of wheel 23, in a direction E perpendicular to axis B and parallel to axes D of the elements 25 located respectively at stations 20 and 21; and station 15 is located in a diametrical direction F perpendicular to direction E and to axis B.

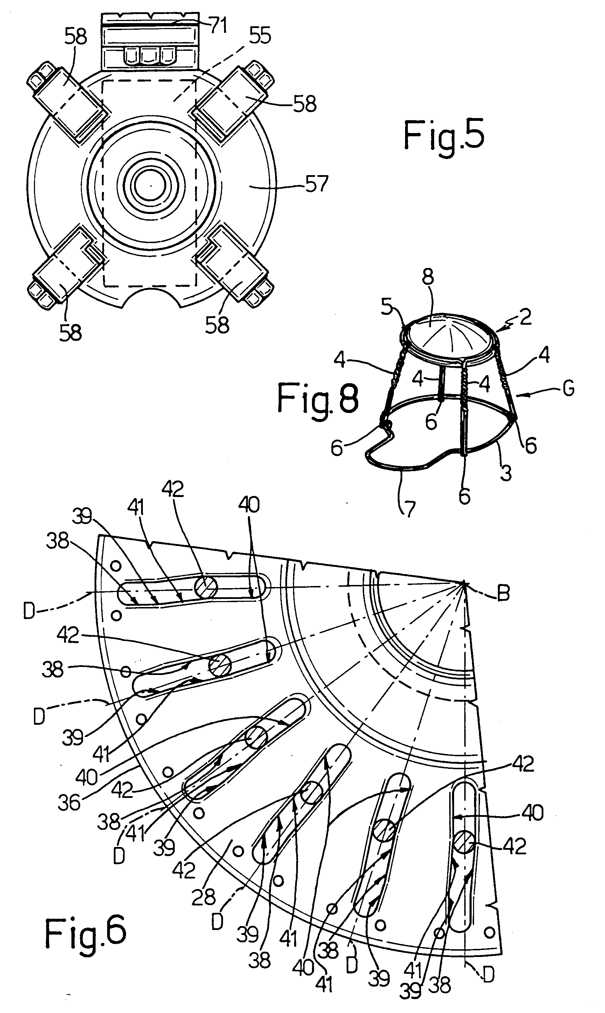

Flange 28 also presents a number of through slots 38, each formed at and communicating with a respective hole 30, and each facing the opposite way to flange 27. More specifically, the profile of each slot 38 is elongated in a substantially radial direction in relation to flange 28, and is defined by a first radial end portion 39 adjacent to edge 36 of flange 28, by a second opposite radial end portion 40 angularly spaced in relation to portion 39, and by a straight intermediate portion 41 inclined in relation to and connected to portions 39, 40, and which is inclined in the opposite direction to the respective portions 41 of the adjacent slots 38 (Figures 1 and 6).

Each element 25 also comprises a pin 42 with its axis parallel to axis B, and which is fitted radially to respective shaft 33 and respective bushing 34, and in sliding manner inside a respective slot 38. More specifically, each pin 42 comprises a substantially cylindrical intermediate portion 43 housed in sliding manner inside respective slot 38 and engaging a radial hole 44 formed through respective bushing 34; a spherical end portion 45 projecting outwards of flange 28 on the opposite side to flange 27; and an opposite externally-threaded end portion 46 screwed radially into respective shaft 33.

Device 10 also comprises a disk 47 of axis B, fitted to the end of shaft 22, adjacent to flange 28 and on the opposite side of flange 28 to flange 27, and which presents a pair of radial openings 48, 49 at respective stations 15, 20, and a projecting edge 50 projecting axially towards flange 27 and extending along the outer periphery of disk 47 with the exception of the peripheral portions defining openings 48, 49. Edge 50 defines a stop for portions 45 of pins 42, to prevent elements 25 from sliding outwards along respective axes D as wheel 23 rotates about axis B.

With reference to Figures 1, 4 and 5, assembly 12 comprises a slide 55 with an axis parallel to direction E and coincident with axis D of the element 25 located at station 21. Slide 55 is supported in axially-sliding manner by a guide 56 integral with structure 9, and presents a substantially cylindrical end portion 57 facing head 35 located at station 21, and presenting four angularly equally spaced arms 58 projecting axially towards head 35 from portion 57 and aligned with respective uprights 4 of a respective fastener G on head 35.

Slide 55 is movable axially back and forth, and hence in direction E, between a withdrawn idle position and a forward operating position. In the withdrawn position, portion 57 and arms 58 are detached from head 35 located at station 21 and supporting a respective fastener G; and, in the forward position, portion 57 is contiguous to end 37 of head 35, and arms 58 engage respective uprights 4 of fastener G in sliding manner, and press them against the outer surface of head 35 to bend them at a given angle in relation to annular element 5.

Assembly 12 also comprises a drive shaft 59 connected to structure 9 in known manner (not shown) and rotating continuously about an axis H parallel to the plane of path C and to direction F; and a cam-and-tappet connection 60 controlled by shaft 59, output-connected to slide 55, and for converting the continuous rotary movement of shaft 59 into the linear back and forth movement of slide 55.

Connection 60 comprises a disk cam 61 of axis H, fitted to shaft 59 and presenting an annular projection 62 (shown only partly) on one face perpendicular to axis H; and a lever 63 hinged centrally to structure 9 about a fixed axis I parallel to axis H, oscillating back and forth about axis I, and presenting an end portion 64 with a pair of tappet rollers 65 engaging projection 62 in rolling manner. Lever 63 also presents a substantially fork-shaped end portion 66 opposite portion 64 and hinged by an eccentric pin 67 to a connecting element 68 fitted to the side of slide 55.

The axial distance between edge 36 of flange 28 and the free ends of arms 58 in the forward position of slide 55 is adjustable by rotating eccentric pin 67 about its hinge axis parallel to axes H and I, so as to adjust as required the final bend angle of uprights 4 of fastener G in relation to annular element 5.

With reference to Figures 1 and 2, assembly 13 comprises a body 70 connected integral with slide 55 by a bar 71, which presents an axis parallel to direction E, extends along the diameter of wheel 23 between stations 20 and 21, is located on the opposite side of disk 47 to flange 28, and is supported in axially-sliding manner by a guide 72 integral with disk 47.

Body 70 is movable back and forth with slide 55 in direction E, and is selectively connectable with the element 25 located at station 20, to move element 25 along axis D to and from channel 14 and between a withdrawn idle position and a forward unloading position. In the idle position, head 35 of element 25 is located adjacent to edge 36 of flange 28; and, in the unloading position, head 35 of element 25 is detached from edge 36 of flange 28 and inserted inside channel 14.

More specifically, bar 71 presents one end 73 hinged about a pin 74 projecting from portion 57 of slide 55 and presenting an axis parallel to axis B (Figure 4); body 70 is fitted in projecting manner by means of screws to the end 76 of bar 71 opposite end 73, and is located through opening 49 in disk 47; and body 70 presents a fork-shaped end portion 77 facing flange 28 and comprising a pair of walls 78 facing each other in direction E and defining a substantially U-shaped through cavity 79.

Portion 77 of body 70 rigidly engages, in direction E, portion 45 of pin 42 of the element 25 located at station 20, so as to move element 25 between said idle and unloading positions, and releases pin 42 from cavity 79 as wheel 23 rotates about axis B.

As element 25 located at station 20 is moved between said idle and unloading positions, pin 42 is guided by the profile of respective slot 38. More specifically, the inclination of portion 41 of slot 38 in relation to portions 39 and 40 is such as to rotate shaft 33 of element 25, and hence respective fastener G, by a predetermined angle about axis D; and, since the respective portions 41 of adjacent slots 38 are inclined in opposite directions, the adjacent elements 25 along path C are rotated in opposite directions by said predetermined angle at station 20.

As such, along channel 14, the uprights 4 of each fastener G are angularly equally spaced in relation to the uprights 4 of the adjacent fasteners G, to prevent fasteners G from jamming.

With reference to Figures 1 and 3, assembly 11 comprises a plate 80 substantially parallel to disk 47, located on the opposite side of disk 47 to flange 28, and presenting an end portion 81 fitted by means of screws to an intermediate portion 83 of bar 71. Plate 80 extends substantially in direction F, is movable back and forth with slide 55 in direction E, and presents a through slot 84 with an elongated profile extending obliquely in relation to directions E and F, and formed in an end portion 85 of plate 80 opposite portion 81. More specifically, slot 84 is defined by two straight parallel longitudinal edges 86 sloping in relation to directions E, F, and converging with the axis of bar 71 towards station 20; and by two substantially semicircular lateral edges 87 connecting edges 86.

Assembly 11 also comprises a slide 88, which is movable back and forth in direction F, is fitted in sliding manner to a guide 89 integral with disk 47 and defining opening 48, and presents a pin 90 projecting from the end facing shaft 22 and engaged in sliding manner inside slot 84.

Slide 88 is selectively connectable to the element 25 located at station 15, to move element 25 along axis D, and hence in direction F, to and from device 16 and between said idle position and a forward loading position in which head 35 of element 25 is detached from edge 36 of flange 28 and is inserted partly inside a corresponding through seat 91 formed on device 16, having an axis coincident with the axis of element 25, and coaxially housing a respective fastener G.

More specifically, slide 88 also presents a fork-shaped end portion 92 located at the opposite end to pin 90 and through opening 48 of disk 47, and presenting two walls 93 facing each other in direction F and defining a substantially U-shaped through cavity 94.

Portion 92 of slide 88 rigidly engages, in direction F, portion 45 of pin 42 of the element 25 located at station 15, to move element 25 between said idle and loading positions, and releases pin 42 from cavity 94 as wheel 23 rotates about axis B.

As element 25 located at station 15 is moved between the idle and loading positions, pin 42 travels exclusively along portion 40 of respective slot 38.

Finally, device 16 comprises a push element 95 coaxial with the seat 91 and element 25 located at station 15, and which is located on the opposite side of seat 91 to element 25, is movable axially back and forth, and is inserted inside seat 91 to push the fastener G housed inside seat 91 on to head 35 of element 25.

Operation of unit 1 will be described as of the cycle-start condition (Figure 1) in which slide 55 is in the withdrawn position; pin 90 of slide 88 engages edge 87 of slot 84 facing station 20; the elements 25 located at stations 15 and 20 are in the idle position with respective pins 42 respectively engaging portion 92 of slide 88 and portion 77 of body 70; pusher element 95 is detached from conveying device 16; and, with the exception of the element 25 at station 15, the elements 25 located along path C between stations 15 and 20 all positively engage respective fasteners G.

Cam 61 of assembly 12 is so timed as to move slide 55, and hence arms 58, in direction E towards the element 25 at station 21 when unit 1 is in the above cycle-start condition, so that arms 58 slide along respective uprights 4 of fastener G on element 25, and press them towards the outer surface of head 35 until slide 55 reaches the forward operating position.

The above movement of slide 55 produces a simultaneous movement of bar 71 and plate 80 in direction E towards station 20; and body 70, connected integral with end 76 of bar 71, travels together with bar 71 in direction E to move respective element 25 at station 20 axially into the unloading position. More specifically, in the course of the movement of element 25 at station 20, respective pin 42 is guided by respective slot 38; and, as pin 42 travels along portion 41 of slot 38, element 25, and hence respective fastener G, is rotated by said predetermined angle about axis D, so that the forward operating position of slide 55 corresponds with the unloading position of the element 25 located at the same time at station 20.

By virtue of the shape of slot 84, the movement of plate 80 in direction E moves slide 88 in direction F towards station 15, and moves respective element 25 at station 15 axially into the loading position, in the course of which movement, pin 42 of element 25 travels along portion 40 of respective slot 38.

At this point, push element 95 moves in direction F, penetrates partly inside a corresponding seat 91 on device 16, and pushes respective fastener G on to head 35 of element 25 at station 15.

Cam 61 of assembly 12 is so timed as to move slide 55 from the forward operating position to the withdrawn position subsequent to push element 95 withdrawing from seat 91 on device 16 and returning to the start position.

The withdrawal of slide 55 moves body 70 and slide 88 in respective directions E and F towards shaft 22, so that elements 25 at stations 15 and 20 are restored to the idle position after respectively receiving a fastener G from conveying device 16 and unloading a fastener G into channel 14.

At this point, the rotation of wheel 23 releases the elements 25 at stations 15 and 20 from portion 92 of slide 88 and portion 77 of body 70 respectively.

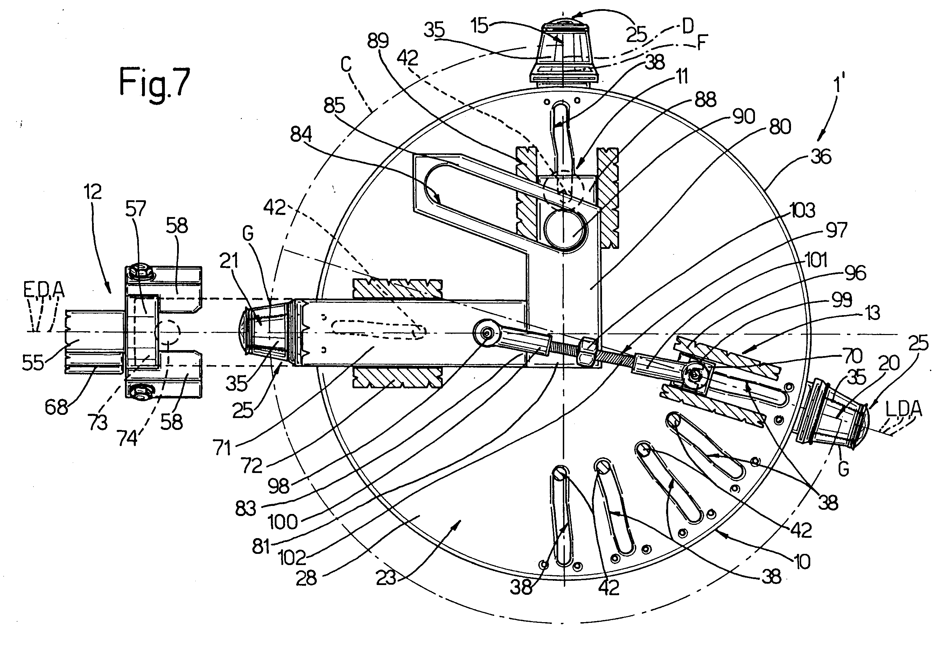

Figure 7 shows a variation of unit 1 according to the present invention, and indicated as a whole by 1'. In the following description, unit 1' is described only insofar as it differs from unit 1, and using the same reference numbers to indicate parts similar or equivalent to those already described.

Unit 1' differs from unit 1 by body 70 being movable back and forth in a direction L radial in relation to wheel 23 and oblique in relation to directions E and F, so that station 20 and channel 14 are located in direction L.

In this case, body 70 is fitted in sliding manner to a fixed guide 96, and is connected to bar 71 by a straight rod 97. More specifically, rod 97 presents one end 98 hinged to bar 71 about an axis parallel to axis B and between guide 72 and plate 80; and an opposite end 99 hinged to body 70 about an axis parallel to axis B.

More specifically, rod 97 is adjustable in length, and comprises two end sleeves 100, 101 hinged respectively to bar 71 and body 70 and presenting respective opposite internal threads; and a threaded shank 102 engaging sleeves 100, 101 and in turn comprising a central nut 103 by which to rotate shank 102 about its axis to adjust the length of rod 97.

Unit 1' operates in the same way as unit 1 and therefore requires no further description.

The advantages of units 1 and 1' according to the present invention will be clear from the foregoing description.

In particular, units 1 and 1' are relatively straightforward in design, and provide, by means of a single movement of slide 55, for also controlling assemblies 11 and 13, so that operation of all three assemblies 11, 12 and 13 may be coordinated by simply timing cam 61 accordingly. Moreover, by virtue of the design of slots 38, operation of slide 55 provides for rotating fasteners G in alternate opposite directions about their respective axes at unloading station 20, so that, along channel 14, the uprights 4 of each fastener G are equally spaced angularly in relation to those of the adjacent fasteners G and so prevented from jamming.

Clearly, changes may be made to units 1 and 1' as described and illustrated herein without, however, departing from the scope of the present invention.

In particular, additional work stations may be provided between stations 15 and 20, and associated with respective processing assemblies connected to one another and to assemblies 11 and 13 by transmission means similar to those described.

Also, directions E and F may be oblique in relation to each other.

## Claims

1. A unit (1, 1') for processing wire products (G), particularly safety fasteners for sparkling drink bottle corks and stoppers, and comprising:
- conveying means (10) for successively receiving said products (G) at a loading station (15), and for feeding the products (G) in steps along a substantially circular path (C) to an unloading station (20) located downstream from said loading station (15) along said path (C);
- at least a first member (88) movable back and forth in a first substantially radial direction (F) in relation to said path (C) to successively transfer said products (G) from supply means (16) to said conveying means (10) at said loading station (15);
- at least a second member (70) movable back and forth in a second substantially radial direction (E, L) in relation to said path (C) to successively transfer said products (G) from said conveying means (10) to an output channel (14) at said unloading station (20); and
- at least a third member (55) movable back and forth in a third substantially radial direction (E) in relation to said path (C) to perform an operation on a said product (G) at a work station (21) located between said loading and unloading stations (15, 20) along said path (C);
characterized by comprising control means (59, 60) for activating one (55) of said members (55, 70, 88); and transmission means (71, 80, 84, 90, 97) for transmitting motion from said one (55) of said members (55, 70, 88) to the other said members (70, 88).

2. A unit as claimed in Claim 1, characterized in that said third member (55) is activated by said control means (59, 60), and is supported by a first fixed guide (56) so as to slide in said third direction; said transmission means comprising a transmission element (71) integral with said third member (55) and extending in said third direction (E), and first motion converting means (80, 84, 90, 97) interposed between said transmission element (71) and said first and second members (88, 70).

3. A unit as claimed in Claim 2, characterized in that said first motion converting means comprise cam means (80, 84, 90) interposed between said transmission element (71) and at least one of said first and second members (88, 70).

4. A unit as claimed in Claim 3, characterized in that said cam means comprise a plate (80) connected integral with said transmission element (71) and extending substantially in said first direction (F); a first through slot (84) having an elongated profile in an oblique direction in relation to said first and third directions (F, E) and formed in one of said first member (88) and said plate (80); and a first pin (90) mounted in sliding manner inside said first slot (84) and fitted to the other of said first member (88) and said plate (80); said first member (88) being supported by a second fixed guide (89) so as to slide in said first direction (F).

5. A unit as claimed in Claim 4, characterized in that said first slot (84) is formed in said plate (80), and said first pin (90) is fitted to said first member (88).

6. A unit as claimed in any one of the foregoing Claims, characterized in that said first and third directions (F, E) are perpendicular to each other.

7. A unit as claimed in any one of the foregoing Claims, characterized in that said second and third directions (E) are aligned with each other; said second member (70) being rigidly connected with said transmission element (71) at the opposite part to said third member (55).

8. A unit as claimed in any one of the foregoing Claims from 2 to 6, characterized in that said first motion converting means comprise articulated connecting means (97) between said second member (70) and said transmission element (71).

9. A unit as claimed in Claim 8, characterized in that said articulated connecting means comprise a rod (97) having one end (98) hinged to said transmission element (71) and an opposite end (99) hinged to said second member (70); said second member (70) being supported by a third fixed guide (96) so as to slide in said second direction (L).

10. A unit as claimed in any one of the foregoing Claims from 2 to 9, characterized in that said control means comprise a shaft (59) rotating continuously about an axis (H) parallel to the plane of said path (C) and perpendicular to said third direction (E); and second motion converting means (60) for converting the continuous rotary movement of said shaft (59) into a linear back and forth movement of said third member (55).

11. A unit as claimed in Claim 10, characterized in that said second motion converting means (60) comprise a disk cam (61) fitted to said shaft (59) and presenting an annular projection (62); and a lever (63) hinged centrally about a fixed axis (I) parallel to the axis (H) of said shaft (59), oscillating back and forth about said fixed axis (I), and presenting an end portion (64) engaging said projection (62) in sliding manner, and an opposite end portion (66) hinged to said third member (55).

12. A unit as claimed in any one of the foregoing Claims, characterized in that said conveying means (10) comprise a wheel (23) rotating in steps about an axis (B) perpendicular to the plane of said path (C); and a number of retaining elements (25) fitted to said wheel (23), equally spaced about said axis (B), and presenting respective radial axes (D) and respective end heads (35) projecting radially from the outer periphery of said wheel (23) and for positively engaging respective said products (G); said retaining elements (25) being mounted in rotary and axially-sliding manner inside respective radial through holes (30) formed in said wheel (23); and said unit (1, 1') comprising selective connecting means (92, 77, 42) for selectively connecting said first and second members (88, 70) to respective said retaining elements (25) located respectively at said loading and unloading stations (15, 20), so that the movement of said first member (88) in said first direction (F) corresponds with an axial movement of the respective said retaining element (25) to and from said supply means (16), and the movement of said second member (70) in said second direction (E, L) corresponds with an axial movement of the respective said retaining element (25) to and from said output channel (14).

13. A unit as claimed in Claim 12, characterized in that said selective connecting means comprise a first element (42) fitted to each said retaining element (25); a second element (92) on said first member (88); and a third element (77) on said second member (70); said first and second elements (42, 92) being rigidly connected to each other in said first direction (F) at said loading station (15), and being released by the rotation of said wheel (23); and said first and third elements (42, 77) being rigidly connected to each other in said second direction (E, L) at said unloading station (20), and being released by the rotation of said wheel (23).

14. A unit as claimed in Claim 13, characterized in that said first element comprises a second pin (42) fitted radially to the respective said retaining element (25) and presenting a substantially spherical end portion (45); said second element comprising a substantially fork-shaped end portion (92) of said first member (88), presenting a first substantially U-shaped cavity (94), and releasably engaging said second pin (42); and said third element comprising a substantially fork-shaped end portion (77) of said second member (70), presenting a second substantially U-shaped cavity (79), and releasably engaging said second pin (42).

15. A unit as claimed in any one of the foregoing Claims from 12 to 14, characterized by comprising angular orienting means (38) active at said unloading station (20) and for rotating one said retaining element (25) at a time back and forth by a predetermined angle about its axis (D) and in the opposite rotation direction to the successive retaining element (25) along said path (C).

16. A unit as claimed in Claim 15, characterized in that said angular orienting means comprise a number of second through slots (38) formed in said wheel (23), located at and communicating with respective said radial holes (30) in said wheel (23), and presenting respective elongated profiles in respective substantially radial directions in relation to said wheel (23); said second pin (42) of each said retaining element (25) being mounted in sliding manner inside a respective said second slot (38); each said second slot (38) presenting opposite, angularly spaced, radial end portions (39, 40), and an intermediate portion (41) inclined in relation to and connected to said end portions (39, 40), and which, when travelled along by the second pin (42) of a respective said retaining element (25), rotates the retaining element (25) by said predetermined angle about its axis (D); and the intermediate portions (41) of respective adjacent said second slots (38) being inclined in opposite directions to rotate the respective said retaining elements (25) in opposite directions.

17. A unit as claimed in any one of the foregoing Claims from 12 to 16, characterized in that said conveying means (10) comprise retaining means (47, 50) for retaining said retaining elements (25) in the withdrawn idle position as said wheel (23) rotates about its axis (B); said retaining means (47, 50) being active along the outer periphery of said wheel (23) with the exception of said loading and unloading stations (15, 20).

18. A unit as claimed in Claim 17, characterized in that said retaining means comprise a fixed disk (47) coaxial with said wheel (23), presenting a pair of radial openings (48, 49) at said loading and unloading stations (15, 20) respectively, and presenting an axially-projecting edge (50) extending about the outer periphery of the disk (47) with the exception of the peripheral portions defining said openings (48, 49); said edge (50) defining a stop for the spherical end portions (45) of the second pins (42) of said retaining elements (25).

19. A unit as claimed in any one of the foregoing Claims from 12 to 18, characterized in that said third member (55) is located facing, in said third direction (E), said retaining element (25) located at said work station (21), and presents a number of operating arms (58) projecting axially towards said retaining element (25) and for cooperating with the respective said product (G) on the retaining element (25).

## Patentansprüche

1. Einheit (1, 1') zur Verarbeitung von Drahterzeugnissen (G), insbesondere Sicherheitsbefestigern für Korken und Verschlüsse für Sprudelgetränkflaschen, mit:
- Fördermitteln (10) zur aufeinanderfolgenden Aufnahme der Erzeugnisse (G) bei einer Ladestation (15), und zur Förderung der Erzeugnisse (G) in Schritten entlang eines im wesentlichen kreisförmigen Weges (C) zu einer stromabwärts von der Ladestation (15) entlang des Weges (C) angeordneten Entladestation (20);
- mindestens einem ersten Glied (88), das in Bezug auf den Weg (C) in einer ersten, im wesentlichen radialen Richtung (F) hin- und herbewegbar ist, um aufeinanderfolgend die Erzeugnisse (G) von Zufuhrmitteln (16) zu den Fördermitteln (10) und der Ladestation (15) zu überführen;
- mindestens einem zweiten Glied (70), das in Bezug auf den weg (C) in einer zweiten, im wesentlichen radialen Richtung (E, L) hin- und herbewegbar ist, um aufeinanderfolgend die Erzeugnisse (G) von den Fördermitteln (10) zu einem Ausgabekanal (14) bei der Entladestation (20) zu überführen und
- mindestens einem dritten Glied (55), das in Bezug auf den Weg (C) in einer dritten, im wesentlichen radialen Richtung (E) hin- und herbewegbar ist, um eine Operation an dem Erzeugnis (G) an einer zwischen den Lade- und Entladestationen (15, 20) entlang des Weges (C) angeordneten Bearbeitungsstation (21) auszuführen; gekennzeichnet durch Steuermittel (59, 60) zur Aktivierung eines (55) der Glieder (55, 70, 88);
und Übertragungsmittel (71, 80, 84, 90, 97) zur Übertragung von Bewegung von dem einen (55) der Glieder (55, 70, 88) zu den anderen Gliedern (70, 88).

2. Einheit nach Anspruch 1, dadurch gekennzeichnet, daß das dritte Glied (55) durch die Steuermittel (59, 60) aktiviert wird und durch eine erste, feste Führung (56) getragen wird, um in die dritte Richtung zu gleiten; die Übertragungsmittel mit einem Übertragungselement (71), das integral mit dem dritten Glied (55) ist und sich in der dritten Richtung (E) erstreckt, und ersten Bewegungsumwandlungsmitteln (80, 84, 90, 97), die zwischen dem Übertragungselement (71) und den ersten und zweiten Gliedern (88, 70) angeordnet sind.

3. Einheit nach Anspruch 2, dadurch gekennzeichnet, daß die ersten Bewegungsumwandlungsmittel Nockenmittel (80, 84, 90) aufweisen, die zwischen dem Übertragungselement (71) und mindestens einem der ersten und zweiten Glieder (88, 70) angeordnet sind.

4. Einheit nach Anspruch 3, dadurch gekennzeichnet, daß die Nockenmittel eine Platte (80) aufweisen, die integral mit dem Übertragungselement (71) verbunden ist und sich im wesentlichen in der ersten Richtung (F) erstreckt; einen ersten Durchgangsschlitz (84) mit einem länglichen Profil in einer in Bezug zu den ersten und dritten Richtungen (F, E) schrägen Richtung und gebildet in dem ersten Glied (88) oder der Platte (80); und einen ersten Stift (90), der in gleitender Weise innerhalb des ersten Schlitzes (84) montiert ist und an dem anderen des ersten Gliedes (88) oder der Platte (80) befestigt ist; wobei das erste Glied (88) durch eine zweite feste Führung (89) getragen ist, um in der ersten Richtung (F) zu gleiten.

5. Einheit nach Anspruch 4, dadurch gekennzeichnet, daß der erste Schlitz (84) in der Platte (80) gebildet ist und der erste Stift (90) an dem ersten Glied (88) befestigt ist.

6. Einheit nach einem der vorhergehenden Ansprüche, dadurch gekennzeichnet, daß die ersten und zweiten Richtungen (F, E) senkrecht zueinander sind.

7. Einheit nach einem der vorhergehenden Ansprüche, dadurch gekennzeichnet, daß die zweiten und dritten Richtungen (E) miteinander ausgerichtet sind; wobei das zweite Glied (70) starr mit dem Übertragungselement (71) an dem gegenüberliegenden Teil zu dem dritten Glied (55) verbunden ist.

8. Einheit nach einem der vorhergehenden Ansprüche 2 bis 6, dadurch gekennzeichnet, daß die ersten Bewegungsumwandlungsmittel gelenkige Verbindungsmittel (97) zwischen dem zweiten Glied (70) und dem Übertragungselement (71) aufweisen.

9. Einheit nach Anspruch 8, dadurch gekennzeichnet, daß die gelenkigen Verbindungsmittel eine Stange (97) mit einem an das Übertragungselement (71) angelenkten Ende (98) und einem gegenüberliegenden, an das zweite Glied (70) angelenkten Ende aufweisen; wobei das zweite Glied (70) durch eine dritte, feste Führung (96) so getragen wird, daß es in der zweiten Richtung (L) gleitet.

10. Einheit nach einem der vorhergehenden Ansprüche 2 bis 9, dadurch gekennzeichnet, daß die Steuermittel eine kontinuierlich um eine Achse (H) parallel zur Ebene des Weges (C) und senkrecht zu der dritten Richtung (E) drehende Welle (59) aufweisen; und zweite Bewegungsumwandlungsmittel (60) zur Umwandlung der kontinuierlichen Drehbewegung der Welle (59) in eine lineare Hin- und Herbewegung des dritten Gliedes (55).

11. Einheit nach Anspruch 10, dadurch gekennzeichnet, daß die zweiten Bewegungsumwandlungsmittel (60) einen Scheibennocken (61) aufweisen, der an der Welle (59) befestigt ist und einen ringförmigen Vorsprung (62) zeigt; und einen Hebel (63), der zentral um eine feste Achse (I) parallel zu der Achse (H) der Welle (59) angelenkt ist, um die feste Achse (I) hin- und herschwingt und einen Endabschnitt (64) zeigt, der an dem Vorsprung (62) in gleitender Weise angreift, und einen gegenüberliegenden, an dem dritten Glied (55) angelenkten Endabschnitt (66).

12. Einheit nach einem der vorhergehenden Ansprüche, dadurch gekennzeichnet, daß die Fördermittel (10) ein Rad (23) aufweisen, das in Schritten um eine Achse (B) senkrecht zu der Ebene des Weges (C) dreht; und eine Anzahl von Rückhalteelementen (25), die an dem Rad (23) befeetigt sind, gleich um die Achse (B) beabstandet sind und jeweils radiale Achsen (D) und jeweils Endköpfe (35) zeigen, die radial vom äußeren Umfang des Rades (23) vorspringen, für einen positiven Eingriff an den Erzeugnissen (G); wobei die Rückhalteelemente (25) in drehbarer und axial gleitender Weise innerhalb jeweiliger radialer, in dem Rad (23) gebildeter Durchgangslöcher (30) montiert sind; und wobei die Einheit (1, 1') selektive Verbindungsmittel (92, 77, 42) zur wahlweisen Verbindung der ersten und zweiten Glieder (88, 70) zu jeweiligen Rückhalteelementen (25) aufweist, die jeweils an den Lade- und Entladestationen (15, 20) angeordnet sind, so daß die Bewegung des ersten Gliedes (88) in der ersten Richtung (F) einer axialen Bewegung des jeweiligen Rückhalteelementes (25) zu und von den Zufuhrmitteln (16) entspricht und die Bewegung des zweiten Gliedes (70) in der zweiten Richtung (E, L) einer axialen Bewegung der jeweiligen Rückhalteelemente (25) zu und von dem Ausgabekanal (14) entspricht.

13. Einheit nach Anspruch 12, dadurch gekennzeichnet, daß die selektiven Verbindungsmittel an jedem Rückhalteelement (25) ein befestigtes erstes Element (42) aufweisen; ein zweites Element (92) an dem ersten Glied (88); und ein drittes Element (77) an dem zweiten Glied (70); wobei die ersten und zweiten Elemente (42, 92) in der ersten Richtung (F) an der Ladestation (15) starr miteinander verbunden sind und durch die Drehung des Rades (23) freigegeben werden; und wobei die ersten und zweiten Elemente (42, 77) in der zweiten Richtung (E, L) an der Entladestation (20) starr miteinander verbunden sind und durch die Drehung des Rades (23) freigegeben werden.

14. Einheit nach Anspruch 13, dadurch gekennzeichnet, daß das erste Element einen zweiten Stift (42) aufweist, der radial an dem jeweiligen Rückhalteelement (25) befestigt ist und einen im wesentlichen kugelförmigen Endabschnitt (45) zeigt; das zweite Element mit einem im wesentlichen gabelförmigen Endabschnitt (92) des ersten Gliedes (88), das einen ersten im wesentlichen U-förmigen Hohlraum (94) zeigt und freigebbar an dem zweiten Stift (42) angreift; und wobei das dritte Element einen im wesentlichen gabelförmigen Endabschnitt (77) des zweiten Gliedes (70) aufweist, der einen zweiten, im wesentlichen U-förmigen Hohlraum (79) zeigt und freigebbar an dem zweiten Stift (42) angreift.

15. Einheit nach einem der Ansprüche 12 bis 14, dadurch gekennzeichnet, daß sie winklige Orientierungsmittel (38) aufweist, die an der Entladestation (20) aktiv sind, für die Drehung jeweils eines Rückhalteelementes (25) zu einer Zeit hin und her um einen vorbestimmten Winkel um seine Achse (D) und in die entgegengesetzte Drehrichtung zu dem nachfolgenden Rückhalteelement (25) entlang des Weges (C).

16. Einheit nach Anspruch 15, dadurch gekennzeichnet, daß die winkligen Orientierungsmittel eine Anzahl von in dem Rad (23) gebildeten zweiten Durchgangsschlitzen (38) aufweisen, die bei jeweiligen radialen Löchern (30) des Rades (23) angeordnet sind und mit diesen in Verbindung stehen und die jeweils langgestreckte Profile in jeweils im wesentlichen radialen Richtungen in Bezug auf das Rad (23) zeigen; wobei der zweite Stift (42) von jedem der Rückhalteelemente (25) in gleitender Weise innerhalb eines jeweiligen zweiten Schlitzes (38) montiert ist; wobei jeder zweite Schlitz (38) gegenüberliegende, winklig beabstandete, radiale Endabschnitte (39, 40) und einen Zwischenabschnitt (41) aufweist, der in Bezug auf die Endabschnitte (39, 40) geneigt und mit diesen verbunden ist und der, wenn ein zweiter Stift (42) eines jeweiligen Rückhalteelementes (25) sich an ihm entlang bewegt, das Rückhalteelement (25) um den vorbestimmten Winkel um seine Achse (D) dreht, und wobei die Zwischenabschnitte (41) von jeweils benachbarten zweiten Schlitzen (38) in entgegengesetzte Richtungen geneigt sind, um die jeweiligen Rückhalteelemente (25) in entgegengesetzte Richtungen zu drehen.

17. Einheit nach einem der vorhergehenden Ansprüche 12 bis 16, dadurch gekennzeichnet, daß die Fördermittel (10) Rückhaltemittel (47, 50) zur Rückhaltung der Rückhalteelemente (25) in der zurückgezogenen Leerlaufposition aufweisen, wenn das Rad (23) sich um seine Achse (B) dreht; wobei die Rückhaltemittel (47, 50) entlang des äußeren Umfangs des Rades (23) mit Ausnahme der Lade- und Entladestationen (15, 20) aktiv sind.

18. Einheit nach Anspruch 17, dadurchg gekennzeichnet, daß die Rückhaltemittel eine mit dem Rad (23) koaxiale feste Scheibe (47) aufweisen, die ein Paar von radialen Öffnungen (48, 49) an den Lade- bzw. Entladestationen (15, 20) zeigt, und die einen axial vorstehenden Rand (50) zeigt, die sich um den äußeren Umfang der Scheibe (47) mit Ausnahme der die Öffnungen (48, 49) definierenden Umfangsabschnitte erstreckt; wobei der Rand (50) einen Anschlag für die kugelförmigen Endabschnitte (45) der zweiten Stifte (42) der Rückhalteelemente (25) definiert.

19. Einheit nach einem der vorhergehenden Ansprüche 12 bis 18, dadurch gekennzeichnet, daß das dritte Glied (55) in der dritten Richtung (E) dem an der Bearbeitungsstation (21) angeordneten Rückhalteelement (25) zugewandt angeordnet ist und eine Anzahl von Arbeitsarmen (58) zeigt, die axial in Richtung des Rückhalteelementes (25) vorstehen, zur Zusammenarbeit mit dem jeweiligen Erzeugnis (G) auf dem Rückhalteelement (25).

## Revendications

1. Unité (1, 1') pour le traitement de produits an fil métallique (G), particulièrement d'attaches de sécurité pour des bouchons pour des bouteilles contenant des boissons gazeuses et comprenant :
- un moyen convoyeur (10) pour recevoir successivement lesdits produits (G) à un poste de chargement (15) et pour acheminer les produits (G) par étapes le long d'un trajet sensiblement circulaire (C) à un poste de déchargement (20) situé en aval dudit poste de chargement (15) le long dudit trajet (C) ;
- au moins un premier élément (88) déplaçable vers l'avant et vers l'arrière selon une première direction sensiblement radiale (F) relativement audit trajet (C) pour transférer successivement lesdits produits (G) du moyen d'acheminement (16) audit moyen de convoyage (10) audit poste de chargement (15) ;
- au moins un deuxième élément (70) déplaçable vers l'arrière et vers l'avant selon une deuxième direction sensiblement radiale (E, L) relativement audit trajet (C) pour transférer successivement lesdits produits (G) dudit moyen convoyeur (10) à un canal de sortie (14) audit poste de déchargement (20) ; et
- au moins un troisième élément (55) déplaçable vers l'arrière et vers l'avant selon une troisième direction sensiblement radiale (E) relativement audit trajet (C) pour exécuter une opération sur un produit précité (G) à un poste de travail (21) situé entre lesdits postes de chargement et de déchargement (15, 20) le long dudit trajet (C) ;
caractérisé en ce qu'il comporte des moyens de commande (59, 60) pour activer l'un (55) desdits éléments (55, 70, 88) ; et des moyens de transmission (71, 80, 84, 90, 97) pour transmettre le mouvement d'un (55) desdits éléments (55, 70, 88) à l'autre desdits éléments (70, 88).

2. Unité selon la revendication 1, caractérisée en ce que ledit troisième élément (55) est activé par ledit moyen de commande (59, 60) et est supporté par un premier guide fixe (56) de façon à coulisser dans ladite troisième direction ; ledit moyen de transmission comprenant un élément de transmission (71) intégral avec ledit troisième élément (55) et s'étendant dans ladite troisième direction (E), et un premier moyen de transformation de mouvement (80, 84, 90, 97) interposé entre ledit élément de transmission (71) et lesdits premier et deuxième éléments (88, 70).

3. Unite selon la revendication 2, caractérisée en ce que ledit premier moyen de transformation de mouvement comprend un moyen de came (80, 84, 90) interposé entre ledit élément de transmission (71) et au moins l'un desdits premier et deuxième éléments (88, 70).

4. Unité selon la revendication 3, caractérisée en ce que ledit moyen de came comprend une plaque (80) reliée intégralement audit élément de transmission (71) et s'étendant essentiellement dans ladite première direction (F) ; une première lente traversante (84) ayant un profil oblong dans une direction oblique relativement auxdites première et troisième directions (F, E) et formée dans l'un dudit premier élément (88) et de ladite plaque (80) ; et un premier axe (90) installé d'une manière coulissante à l'intérieur de ladite première fente (84) et adapté à l'autre dudit premier élément (88) et de ladite plaque (80) ; ledit premier élément (88) étant supporté par un deuxième guide fixe (89) de façon à coulisser dans ladite première direction (F).

5. Unité selon la revendication 4, caractérisée en ce que ladite première lente (84) est ménagée dans ladite plaque (80), et ledit premier axe (90) est adapté audit premier élément (88).

6. Unité selon l'une des revendications précédentes, caractérisée en ce que lesdites première et troisième directions (F, E) sont perpendiculaires l'une à l'autre.

7. Unité selon l'une des revendications précédentes, caractérisée en ce que lesdites deuxième et troisième directions (E) sont alignées l'une avec l'autre ; ledit deuxième élément (70) étant relié rigidement audit élément de transmission (71) à la partie opposée audit troisième élément (55).

8. Unité selon l'une des revendications précédentes 2 à 6, caractérisée en ce que ledit premier moyen de transformation de mouvement comprend un moyen de connexion articulé (97) entre ledit deuxième élément (70) et ledit élément de transmission (71).

9. Unité selon la revendication 8, caractérisée en ce que ledit moyen de connexion articulée comprend une tige (97) dont une extrémité (98) est articulée audit élément de transmission (71) et dont l'extrémité opposée (99) est articulée audit deuxième élément (70) ; ledit deuxième élément (70) étant supporté par un troisième dispositif de guidage fixe (96) de manière à coulisser dans ladite deuxième direction (L).

10. Unité selon l'une des revendications précédentes 2 à 9, caractérisée en ce que ledit moyen de commande comprend un arbre (59) tournant continuellement autour d'un axe (H) parallèle au plan dudit trajet (C) et perpendiculaire à ladite troisième direction (E) ; et un deuxième moyen de transformation de mouvement (60) pour transformer le mouvement de rotation continu dudit arbre (59) en un mouvement linéaire vers l'arrière et vers l'avant dudit troisième élément (55).

11. Unité selon la revendication 10, caractérisée en ce que ledit deuxième moyen de transformation de mouvement (60) comprend une came à disque (61) adaptée audit arbre (59) et présentant une salle annulaire (62) ; et un lever (63) articulé centralement autour d'un axe fixe (I) parallèle à l'axe (H) dudit arbre (59) oscillant vers l'arrière et vers l'avant autour dudit axe fixe (I) et présentant une portion d'extrémité (64) venant en prise avec ladite saillie (62) d'une manière coulissante, et une portion d'extrémité opposée (66) articulée audit troisième élément (55).

12. Unité selon l'une des revendications précédentes, caractérisée en ce que ledit moyen de convoyage (10) comprend une roue (23) tournant par étapes autour d'un axe (B) perpendiculaire au plan dudit trajet (C) ; et un nombre d'éléments de retenue (25) adaptés à ladite roue (23), espacés uniformément autour dudit axe (B) et présentant des axes radiaux respectifs (D) et des têtes d'extrémité respectives (35) faisant saille radialement de la périphérie extérieure de ladite roue (23) et pour venir positivement en prise avec lesdits produits respectifs (G) ; lesdits éléments de retenue (25) étant installés d'une manière rotative et coulissant axialement à l'intérieur de trous traversants radiaux respectifs (30) ménagés dans ladite roue (23) ; et ladite unité (1, 1') comprenant des moyens de connexion sélectifs (92, 77, 42) pour connecter sélectivement lesdits premier et deuxième éléments (88, 70) auxdits éléments de retenue respectifs précités (25) situés respectivement audit poste de chargement et de déchargement (15, 20) de telle sorte que le déplacement du premier élément (88) dans ladite première direction (F) correspond à un déplacement axial de l'élément de retenue respectif précité (25) vers et au loin dudit moyen d'amenée (16), et le déplacement dudit deuxième élément (70) dans ladite deuxième direction (E, L) correspond à un déplacement axial de l'élément de retenue respectif précité (25) vers et au loin dudit cartel de sortie (14).

13. Unité selon la revendication 12, caractérisée en ce que ledit moyen de connexion sélectif comprend un premier élément (42) adapté à chaque élément de retenue précité (25) ; un deuxième élément (92) sur ledit premier élément (88) ; et un troisième élément (77) sur ledit deuxième élément (70) ; lesdits premier et deuxième éléments (42, 92) sont reliés rigidement l'un à l'autre dans ladite première direction (F) audit poste de chargement (15) et sont libérés par la rotation de ladite roue (23) ; et lesdits premier et troisième éléments (42, 77) étant reliés rigidement l'un à l'autre dans ladite deuxième direction (E, L) audit poste de déchargement (20) et sont libérés par la rotation de ladite roue (23).

14. Unité selon la revendication 13, caractérisée en ce que ledit premier élément comprend un deuxième axe (42) adapté radialement à l'élément de retenue respectif précite (25) et présentant une partie d'extrémité sensiblement sphérique (45) ; ledit deuxième élément comprenant une partie d'extrémité sensiblement en forme de fourche (92) dudit premier élément (88), présentant une première cavité sensiblement en forme de U (94) et venant relâchablement en prise avec ledit deuxième axe (42) ; et ledit troisième élément comprenant une partie d'extrémité sensiblement en forme de fourche (77) dudit deuxième élément (70), présentant une deuxième cavité sensiblement en forme de U (79) et venant relâchablement en prise avec ledit deuxième axe (42).

15. Unité selon l'une des revendications précédentes 12 à 14, caractérisée en ce qu'elle comporte un moyen d'orientation angulaire (38) actif audit poste de déchargement (20) et pour faire tourner l'un desdits éléments de retenue (25) à la fois vers l'arrière et vers l'avant suivant un angle prédéterminé autour de son axe (D) et dans la direction de rotation opposée à l'élément de retenue successif (25) le long dudit trajet (C).

16. Unité selon la revendication 15, caractérisée en ce que ledit moyen d'orientation angulaire comprend un nombre de deuxième fentes traversantes (38) ménagées dans ladite roue (23), situées à et communiquant avec lesdits trous radiaux respectifs précités (30) dans ladite roue (23) et présentant des profils oblongs respectifs dans des directions respectives sensiblement radiales relativement à ladite roue (23) ; ledit deuxième axe (42) de chacun desdits éléments de retenue (25) étant installé d'une manière coulissante à l'intérieur d'une deuxième fente respective précitée (38) ; chacun desdits deuxièmes fentes (38) présentant des parties d'extrémité radiales opposées, espacées angulairement (39, 40) et une partie intermédiaire (41) inclinée relativement à et reliée auxdites parties d'extrémité (39, 40) et qui, lorsqu'elle est traversée par ledit deuxième axe (42) d'un élément de retenue respectif précité (25) fait tourner l'élément de retenue (25) selon ledit angle prédéterminé autour de son axe (D) ; et les parties intermédiaires (41) desdites deuxièmes fentes adjacentes respectives (38) étant inclinées dans des directions opposées pour faire tourner les éléments de retenue respectifs précités (25) dans des directions opposées.

17. Unité selon l'une des revendications précédentes 12 à 16, caractérisée en ce que ledit moyen de convoyage (10) comprend des éléments de retenue (47, 50) pour retenir lesdits éléments de retenue (25) dans la position libre en retrait lorsque ladite roue (23) tourne autour de son axe (B) ; lesdits moyens de retenue (47, 50) étant actifs le long de la périphérie extérieure de ladite roue (23) à l'exception desdits postes de chargement et de déchargement (15, 20).

18. Unité selon la revendication 17, caractérisée en ce que lesdits moyens de retenue comprennent un disque fixe (47) coaxial avec ladite roue (23), présentant une paire d'ouvertures radiales (48, 49) auxdits postes de chargement et de déchargement (15, 20) respectivement, et présentant un bord faisant saillie axialement (50) s'étendant autour de la périphérie extérieure du disque (47) à l'exception des parties périphériques définissant lesdites ouvertures (48, 49) ; ledit bord (50) définissant une butée d'arrêt pour les parties d'extrémité sphériques (35) des deuxièmes axes (42) desdits éléments de retenue (25).

19. Unité selon l'une des revendications précédentes 12 à 18, caractérisée en ce que ledit troisième élément (55) est localisé de façon à être orienté, dans ladite troisième direction (E) vers ledit élément de retenue (25) situé audit poste de travail (21) et présente un certain nombre de bras actifs (58) faisant saillie axialement vers ledit élément de retenue (25) et prévus pour coopérer avec le produit respectif précité (G) sur l'élément de retenue (25).
